# EUROPEAN PATENT SPECIFICATION

(11) **EP 3 152 456 B1**
(45) Date of publication and mention of the grant of the patent: **18.03.2020**
(21) Application number: 15726936.6
(22) Date of filing: 29.05.2015
(51) Int. Cl.: F16F 9/48, F16F 9/36, F16F 9/32, F16F 9/10

(54) **DAMPER ASSEMBLY FOR PROVIDING DIFFERENT DAMPING EFFECTS AT DIFFERENT PARTS OF THE STROKE**
DÄMPFERANORDNUNG, UM UNTERSCHIEDLICHE DÄMPFUNGSWIRKUNGEN AN VERSCHIEDENEN STELLEN DER HUBLAGE.
AMORTISSEUR AVEC DIFFERENTES CARACTERISTIQUES D'AMORTISSEMENT LE LONG DE LA COURSE

(30) Priority: 03.06.2014 GB 201409874
(43) Date of publication of application: 12.04.2017
(73) Proprietor: Titus d.o.o. Dekani, 6271 Dekani (SI)
(72) Inventor: PECAR, David, 6276 Pobegi (SI); SVARA, Valter, 6310 Izola (SI)
(74) Representative: Treeby, Philip David William
(86) International application number: PCT/EP2015/062029
(87) International publication number: WO 2015/185462

(56) References cited:
- EP-A1- 0 236 204
- EP-A1- 1 598 124
- EP-A2- 0 436 461
- US-A- 5 657 511

## Description

This invention relates to dampers.

The invention provides a damper assembly comprising a piston and cylinder type damper with a piston assembly mounted for reciprocal movement in a cylinder containing damping fluid, with the piston assembly dividing the interior of the cylinder into two chambers and providing a means of communication for passage of damping fluid between the chambers, the means of communication including a conduit through the piston assembly, with the conduit containing an element in the form of an elongate pin that partly occludes it, wherein the means of communication is arranged to allow passage of more or less damping fluid depending on the position of the piston assembly with respect to the cylinder along its path of reciprocation, characterised in that the conduit has a stepped bore or the elongate pin has a stepped diameter, in that the cylinder has a stepped bore with at least two different diameter bore portions, and in that the piston assembly has at least two seals, a respective one to suit each bore portion. The European patent application EP0 436 461 A2 discloses all the features of the preamble of claim 1.

By way of example, embodiments of the invention will now be described with reference to the accompanying drawings, in which:
Figure 1 is a sectional view through a damper according to the invention in its fully extended condition,
Figure 2 is a part cross-sectional view through the piston assembly of the Figure 1 damper in the plane marked AA,
Figure 3 is a sectional view through the Figure 1 damper in its fully compressed condition, and
Figure 4 is a part cross-sectional view through the piston assembly in the plane marked BB.

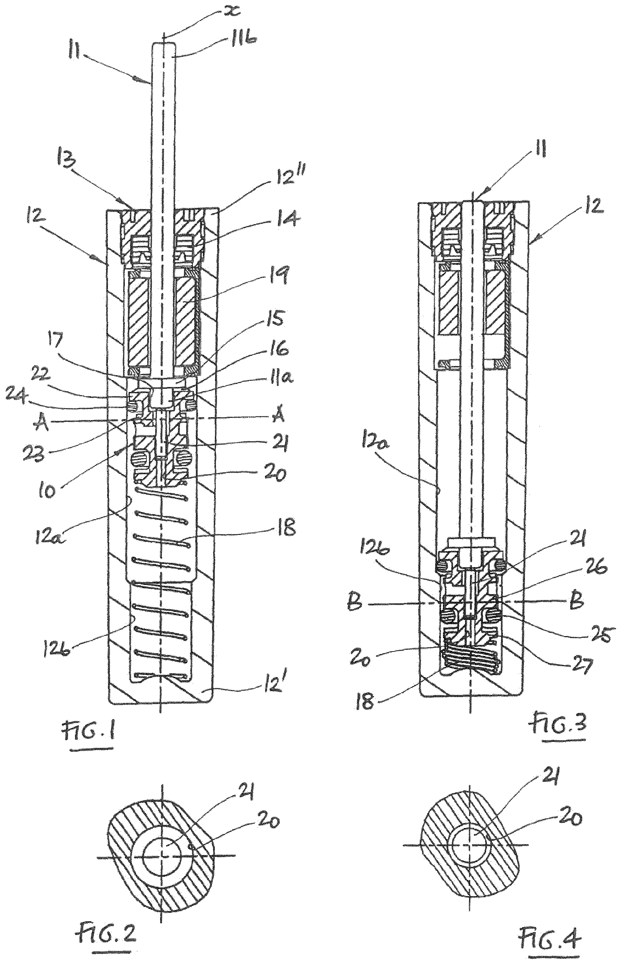

The damper seen in Figure 1 is a linear piston and cylinder type damper having a piston assembly 10, a piston rod 11 and a cylinder 12. The cylinder 12 is closed at one end 12' and contains a damping medium, such as oil or silicone. The piston rod 11 is mounted for linear reciprocal movement with respect to the cylinder 12 along its longitudinal axis x. A free end of the piston rod 11 extends out of the other end 12" of the cylinder 12, which is open. A cap assembly 13 closes off the open end 12" of the cylinder 12. The cap assembly 13 provides sliding support for the mounting of the piston rod 11 and has a suitable seal 14 to prevent leakage of damping medium out of the cylinder 12.

The piston rod 11 extends into the interior of the cylinder 12, where its inner end 11a engages the piston assembly 10. More particularly, the piston rod 11 incorporates a flange 15 which engages an axial end surface of the piston assembly 10. The arrangement helps to spread the load and thus minimise the risk of damage to the piston assembly 10, which may typically be made out of plastics material. A groove 16 is provided in the axial end surface of the piston assembly 10 to allow for passage of damping medium between the flange 15 and the piston assembly.

A hole 17 in the axial end surface of the piston assembly 10 is designed to receive the inner end 11a of the piston rod 11 to help position and guide it during its movement relative to the cylinder 12. Space is provided between the piston rod inner end 11a and the hole 17 to allow for passage of damping medium.

The piston assembly 10 divides the interior of the cylinder 12 into two separate chambers. A compression spring 18 is arranged in one of these chambers, mounted between the closed end 12' of the cylinder 12 and the piston assembly 10. The spring 18 acts to press the piston assembly 10 into its engagement with the piston rod 11, hence biasing the piston rod towards its extended position. In the other chamber, a resiliently collapsible element 19 of known design is arranged. The purpose of this element 19 is to compensate for changes in volume in the chambers within the cylinder 12 that result from movements of the piston assembly 10.

The damper is seen in Figure 1 in its fully extended condition, that is, with the free end 11b of the piston rod 11 extending out of the cylinder 12 to its fullest extent. In Figure 3, the damper is seen in its fully compressed condition, that is, with the piston rod 11 pressed into the cylinder 12 to its fullest extent. The difference between these two extremes, going from the Figure 1 condition to the Figure 3 condition, represents the working stroke of the damper. In its working stroke, the damper provides a damped resistive force to an impact on the free end 11b of the piston rod 11, for example, from a closing door. On its return stroke, that is, going from the Figure 3 condition back to the Figure 1 condition, the damper provides little or no damped resistive force. The return stroke of the damper is effected by the action of the spring 18.

It will be seen that the bore of the cylinder 12 is stepped, meaning that the piston assembly 10 will travel through bores of different diameters during its working stroke. This arrangement enables the damper to be designed to produce damped resistive forces of different magnitudes in two distinct stages. The first of these stages occurs when the piston rod 11 is initially pressed into the cylinder 12 from its fully extended position. In this initial stage, it is preferable for the resistive force produced by the damper to be relatively "soft", ie of relatively low magnitude. If the initial action of the damper is too hard, there can be a tendency for it not to absorb energy, but simply to reflect it. In practice this is manifested by a closing door tending to bounce off the damper. In the second stage, the resistive force can be designed to be much greater. In this way, the damper can be tailored to be capable of absorbing relatively high impacts without causing "bounce".

The action of the damper is governed by a number of controllable passageways in the piston assembly 10 that allow for various different predetermined flows of damping medium between the two chambers. Fluid communication between the two chambers during the working stroke of the damper is provided principally by a central conduit 20 that extends through the piston assembly 10. The conduit 20 is stepped and has located within it an elongate pin element 21. The pin element 21 is designed to partly occlude the conduit 20, thereby leaving gaps between them which vary in size along the length of the pin element. It is these gaps that essentially control the damping characteristics of the damper, as will be explained in more detail below.

As its end near the piston rod 11, the piston assembly 10 has axially spaced apart flanges 22, 23 and between these is located a first seal 24 in the form of an O-ring. The seal 24 is in sealing engagement with the larger bore portion 12a of the cylinder 12 and is able to move axially relative to the piston assembly 10 between the flanges 22, 23. When the piston rod 11 receives an impact, eg from a closing door, it will drive the piston assembly 10 further into the cylinder 12 and as it does so, the flange 22 will be pressed into abutting engagement with the seal 23, thus effectively sealing off fluid communication around the outside of the flange 22. In this state, fluid communication across the piston assembly 10 is only possible via the annular gap between the pin element 21 and the conduit 20 at the position marked AA in Figure 1. As seen in Figure 2, this annular gap is relatively large, meaning that the damping action at this stage is of relatively low magnitude.

If the piston rod 11 continues to be forced into the cylinder 12, it will continue to drive the piston assembly 10 further into the cylinder until it will eventually enter into the smaller bore portion 12b of the cylinder 12 . The smaller bore portion 12b is designed to be sealingly engaged by a second seal 25 on the piston assembly 10, also in the form of an O-ring. The second seal 25 is located between two further flanges 26, 27 spaced axially apart on the piston assembly 10 and is moveable axially relative to the piston assembly between these flanges.

As the piston assembly 10 continues to be pressed further into the cylinder 12, it will eventually enter into the smaller bore portion 12b. At this stage, the second seal 25 will come into sealing engagement with the smaller bore portion 12b. The second seal 25 at this time will also be in abutting engagement with the flange 26, thus effectively sealing off fluid communication around the outside of this flange. Now, the only fluid communication across the piston assembly 10 is via the annular gap between the pin element 21 and the conduit 20 at the position marked BB in Figure 3. As will be seen in Figure 4, this annular gap is relatively small, meaning that the damping action at this stage will be of relatively high magnitude.

In practice, dampers of this nature for use in furniture are relatively small items, and the passageways that provide the controlled flow of fluid across the piston assembly are consequently tiny. The arrangements described above of providing a conduit which is partly occluded by a control element have the advantage that they enable the damping characteristics of the damper to be controllable with a fair degree of accuracy and with a fair degree of reliability in terms of manufacturing tolerance.

It will be understood that the damper can be designed to have more than the two stages of damping illustrated in this embodiment.

It will further be understood that the mechanism for providing different damping characteristics, ie the controllable fluid passageways of predetermined dimensions, here in the form of a pin element in a stepped conduit, may be varied. For example, one possible alternative arrangement would be to provide a plain conduit through the piston assembly with a stepped diameter pin element. Another non-claimed alternative would be to replace the pin element with another form of element, such as a sphere, or provide two or more such elements.

## Claims

1. A damper assembly comprising a piston and cylinder type damper with a piston assembly (10) mounted for reciprocal movement in a cylinder (12) containing damping fluid, with the piston assembly dividing the interior of the cylinder into two chambers and providing a means of communication for passage of damping fluid between the chambers, the means of communication including a conduit (20) through the piston assembly, with the conduit containing an element in the form of an elongate pin (21) that partly occludes it, wherein the means of communication is arranged to allow passage of more or less damping fluid depending on the position of the piston assembly with respect to the cylinder along its path of reciprocation, the conduit (20) has a stepped bore or the elongate pin (21) has a stepped diameter, the cylinder (12) has a stepped bore with at least two different diameter bore portions (12a, 12b), **characterised in that** the piston assembly (10) has at least two seals (24, 25), a respective one to suit each bore portion.

2. A damper assembly as claimed in claim 1 wherein the means of communication is arranged to allow passage of less damping fluid towards the end of the working stroke of the piston assembly (10).

## Patentansprüche

1. Dämpferanordnung, umfassend einen Dämpfer der Art aus Kolben und Zylinder mit einer Kolbenanordnung (10), die zur hin- und hergehenden Bewegung in einem Dämpfungsfluid enthaltenden Zylinder (12) angebracht ist, wobei die Kolbenanordnung das Innere des Zylinders in zwei Kammern teilt und ein Verbindungsmittel zum Hindurchgelangen von Dämpfungsfluid zwischen den Kammern bereitstellt, wobei das Verbindungsmittel einen Durchgang (20) durch die Kolbenanordnung umfasst, wobei der Durchgang ein Element in Form eines langgestreckten Zapfens (21) enthält, das ihn teilweise versperrt, wobei das Verbindungsmittel dazu angeordnet ist, abhängig von der Lage der Kolbenanordnung in Bezug auf den Zylinder entlang seines Wegs der Hin- und Herbewegung, das Hindurchgelangen von mehr oder weniger Dämpfungsfluid zu ermöglichen, wobei der Durchgang (20) eine abgestufte Bohrung aufweist oder der langgestreckte Zapfen (21) einen abgestuften Durchmesser aufweist und der Zylinder (12) eine abgestufte Bohrung mit mindestens zwei Bohrungsabschnitten (12a, 12b) mit unterschiedlichem Durchmesser aufweist, **dadurch gekennzeichnet, dass** die Kolbenanordnung (10) mindestens zwei Dichtungen (24, 25) aufweist, von denen jeweils eine zu jedem Bohrungsabschnitt passt.

2. Dämpferanordnung nach Anspruch 1, wobei das Verbindungsmittel dazu angeordnet ist, zum Ende des Arbeitstakts der Kolbenanordnung (10) hin das Hindurchgelangen von weniger Dämpfungsfluid zu ermöglichen.

## Revendications

1. Ensemble amortisseur comprenant un amortisseur du type à piston et cylindre doté d'un ensemble piston (10) monté pour un mouvement de va-et-vient dans un cylindre (12) contenant un fluide d'amortissement, l'ensemble piston divisant l'intérieur du cylindre en deux chambres et fournissant un moyen de communication pour le passage de fluide d'amortissement entre les chambres, le moyen de communication incluant une conduite (20) à travers l'ensemble piston, la conduite contenant un élément présentant la forme d'une broche allongée (21) qui l'occlut partiellement, dans lequel le moyen de communication est agencé pour permettre le passage d'une quantité plus ou moins importante de fluide d'amortissement en fonction de la position de l'ensemble piston par rapport au cylindre le long de son trajet de mouvement de va-et-vient, la conduite (20) présente un trou étagé ou la broche allongée (21) présente un diamètre étagé, le cylindre (12) présente un trou étagé doté d'au moins deux parties de trou de diamètres différents (12a, 12b), **caractérisé en ce que** l'ensemble piston (10) présente au moins deux joints (24, 25), un joint respectif étant destiné à s'adapter à chacune des parties de trou.

2. Ensemble amortisseur selon la revendication 1 dans lequel le moyen de communication est agencé pour permettre un passage d'une quantité inférieure de fluide d'amortissement en direction de l'extrémité de la course de travail de l'ensemble piston (10).
